# EUROPEAN PATENT APPLICATION

(11) **EP 4 407 776 A1**
(43) Date of publication of application: **31.07.2024**
(21) Application number: 22874497.5
(22) Date of filing: 23.08.2022
(51) Int. Cl.: H01M 50/50, H01M 50/503, H01M 50/543

(54) **CONNECTOR, BATTERY PACK, AND ELECTRIC DEVICE**

(30) Priority: 28.09.2021 CN 202111145826
(71) Applicant: DONGGUAN POWERAMP TECHNOLOGY LIMITED, Dongguan, Guangdong 523000 (CN)
(72) Inventor: WANG, Shenbo, Dongguan, Guangdong 523000 (CN); LING, Xianjin, Dongguan, Guangdong 523000 (CN)
(74) Representative: Icosa
(86) International application number: PCT/CN2022/114320
(87) International publication number: WO 2023/051104

(57) **Abstract**

A connector is disclosed, including a first insulator and a second insulator disposed along a first direction, and a plurality of conductive pieces spaced apart between the first insulator and the second insulator. Each conductive piece includes a first connecting portion and a second connecting portion. Both the first connecting portion and the second connecting portion are configured to be connected to other conductive pieces. The second connecting portions of the plurality of conductive pieces are spaced apart along a second direction. In the connector of this application, one conductive piece is connected to other conductive pieces by the first connecting portion and the second connecting portion, thereby avoiding the need of a current collecting plate, a sampling terminal, and a voltage sensing harness, and reducing the number of materials that need to be used. This application further provides a battery pack that employs the connector, and an electrical device that employs the battery pack

## Description

### TECHNICAL FIELD

This application relates to the technical field of energy storage, and in particular, to a connector, a battery pack, and an electrical device.

### BACKGROUND

In a battery, tabs of a plurality of battery cells are usually passed through a current collecting plate and connected to a sampling terminal on the current collecting plate to implement series connection of pouch cells, and are connected to the current collecting plate by a voltage sensing harness to collect voltage, thereby involving use of many materials and a high production cost.

### SUMMARY

In view of the foregoing situation, it is necessary to provide a connector, a battery pack, and an electrical device to avoid the need of a current collecting plate, a sampling terminal, and a voltage sensing harness, and reduce the number of materials that need to be used.

An embodiment of this application provides a connector. The connector includes a first insulator and a second insulator disposed along a first direction, and a plurality of conductive pieces spaced apart from each other are disposed between the first insulator and the second insulator. Each conductive piece includes a first connecting portion and a second connecting portion. Both the first connecting portion and the second connecting portion are configured to be connected to other conductive pieces. The second connecting portions of the plurality of conductive pieces are spaced apart along a second direction.

One conductive piece is connected to other conductive pieces by the first connecting portion and the second connecting portion, thereby avoiding the need of a current collecting plate, a sampling terminal, and a voltage sensing harness, and reducing the number of materials that need to be used.

Further, in some embodiments of this application, the second direction is perpendicular to the first direction.

Further, in some embodiments of this application, the third connecting portion includes a third connecting sub-portion. The third connecting sub-portion is bent toward a side of the first insulator along the second direction. The third connecting sub-portion is connected to the second connecting portion. The bent third connecting sub-portion increases the distance between the adjacent second connecting portions, reduces the risk of a short circuit caused by the touch between the adjacent second connecting portions, and facilitates welding between the second connecting portion and the circuit board.

Further, in some embodiments of this application, the first insulator is provided with a plurality of first openings. The second insulator is provided with a plurality of second openings. along the first direction, a projection of the plurality of first openings at least partially overlaps with a projection of the plurality of second openings.

Further, in some embodiments of this application, the projection of the plurality of second openings is located inside the projection of the plurality of first openings along the first direction. By reducing the open area of the second opening, this application reduces the risk of a short circuit caused by an object dropped onto the second surface located at the second opening.

Further, in some embodiments of this application, the first connecting portion includes a first connecting region and a first extending region. The first connecting region is located inside one of the plurality of first openings when viewed along the first direction. The first connecting region is located inside one of the plurality of second openings when viewed along a direction opposite to the first direction. The first extending region extends outward from a periphery of the first connecting region. The first extending region is located between the first insulator and the second insulator.

Further, in some embodiments of this application, the connector further includes a third insulator. The third insulator is connected to a side of the second insulator, the side being oriented away the first insulator. Along the first direction, a projection of the third insulator overlaps a projection of the third connecting portion and/or the second connecting portion. With the third insulator being connected to a plurality of second connecting portions, this application reduces the possibility of deformation of the plurality of second connecting portions and increases the structural strength of the connector. With the third insulator being connected to the third connecting portion, this application further increases the structural strength of the connector and reduces the possibility of deformation of the connector.

Further, in some embodiments of this application, along the first direction, the projection of the third insulator covers the projection of the third connecting sub-portion.

Further, in some embodiments of this application, along the first direction, the projection of the third insulator covers a part of the projection of the second connecting portion.

Further, in some embodiments of this application, along the first direction, the third connecting portion includes a second region. The second region is connected to the third connecting sub-portion. Along the first direction, the projection of the third insulator overlaps the projection of the second region. This further increases the structural strength of the connector and reduces the possibility of deformation of the connector.

Further, in some embodiments of this application, at least one of the third connecting portions includes a first region. The first region extends to a position between two adjacent first connecting portions along the second direction, thereby increasing the structural strength of the connector, and reducing the possibility of bending of the connector along the second direction.

An embodiment of this application further provides a battery pack. The battery pack includes a housing assembly, a cell module, and the connector according to any one of the embodiments described above. The cell module is disposed inside the housing assembly and connected to the connector.

Further, in some embodiments of this application, the cell module includes a plurality of battery cells stacked along a third direction. Each battery cell includes a cell housing, an electrode assembly disposed in the cell housing, and an electrode terminal connected to the electrode assembly and led out of the cell housing. The first connecting portion is connected to the electrode terminal.

Further, in some embodiments of this application, the third direction is perpendicular to both the first direction and the second direction.

Further, in some embodiments of this application, the electrode terminal includes a welding portion. Along the first direction, a projection of the welding portion is located inside a projection of the first connecting region. In this way, the welding portion is located inside the edge of the first connecting region, thereby making it convenient to weld the welding portion onto the first connecting region and improving the yield rate of welding.

Further, in some embodiments of this application, along the first direction, projections of electrode terminals of adjacent battery cells are spaced apart from each other, and the electrode terminals of adjacent battery cells are connected to each other by the first connecting portion.

Further, in some embodiments of this application, the cell housing includes a first part and a second part. The electrode assembly is disposed in the first part. The second part is connected to the first part. The electrode terminal protrudes from the second part. The first part coordinates with the second part to form a first recess. Along a direction opposite to the first direction, a projection of the third connecting portion is at least partially located inside the first recess, thereby reducing the space occupied by the connector.

Further, in some embodiments of this application, the battery pack further includes a fourth insulator. The fourth insulator is disposed in the first recess and located between adjacent electrode terminals.

The fourth insulator disposed reduces the risk of a short circuit between adjacent electrode terminals, facilitates placement of the connector, and alleviates vibration of the connector.

Further, in some embodiments of this application, the battery pack further includes a first structural component and a circuit board. The circuit board is connected to the first structural component. The circuit board comprises a plurality of first connecting holes, the first structural component is provided with a second recess . The third connecting portion is disposed in the second recess. The second connecting portion is disposed in the first connecting hole.

The position of the third connecting portion is defined by the second recess, thereby increasing the positioning precision during assembling, and facilitating assembling.

An embodiment of this application further provides an electrical device, including the battery pack disclosed in any one of the embodiments described above.

In the battery pack and the electrical device, one conductive piece is connected to other conductive pieces by the first connecting portion and the second connecting portion, thereby avoiding the need of a current collecting plate, a sampling terminal, and a voltage sensing harness, and reducing the number of materials that need to be used.

### BRIEF DESCRIPTION OF DRAWINGS

FIG. 1 is a schematic structural diagram of a connector according to some embodiments;
FIG. 2 is a schematic structural diagram of a connector from another viewing angle according to some embodiments;
FIG. 3 is an schematic exploded view of a connector according to some embodiments;
FIG. 4 is a schematic exploded view of a battery pack according to some embodiments;
FIG. 5 is a schematic structural diagram of a cell module according to some embodiments;
FIG. 6 is a schematic structural diagram of a battery cell according to some embodiments;
FIG. 7 is a cross-sectional schematic view of a battery pack according to some embodiments;
FIG. 8 is a schematic structural diagram of a second unit from another viewing angle according to some embodiments;
FIG. 9 is a cross-sectional schematic view of a connector and a cell module according to some embodiments;
FIG 10 is a schematic close-up view of the connector and cell module shown in FIG. 9;
FIG. 11 is a cross-sectional schematic view of a connector and a cell module according to some other embodiments;
FIG. 12 is a schematic structural diagram of a second structural component according to some embodiments;
FIG. 13 is a schematic structural diagram of a part of a battery pack according to some embodiments;
FIG. 14 is a schematic structural diagram of a first shell according to some embodiments; and
FIG. 15 is a schematic structural diagram of an electrical device according to an embodiment.

### List of reference numerals:

connector 100
first insulator 10
first opening 11
second insulator 20
second opening 21
conductive piece 30
first connecting portion 31
first connecting region 31a
first surface 311
second surface 312
first extending region 31b
second connecting portion 32
third connecting portion 33
third connecting sub-portion 33a
first region 331
second region 332
third insulator 40
through-hole 101
third opening 102
first bulge 103
battery pack 1000
cell module 200
battery cell 200a
first battery cell 200a1
cell housing 201
first part 201a
second part 201b
first recess 201c
electrode terminal 202
first terminal 202a
second terminal 202b
welding portion 202c
housing assembly 300
first shell 301
second shell 302
third bulge 301a
fifth opening 3011
protruding portion 333
fourth insulator 400
first structural component 500
accommodation portion 501
fourth opening 502
second recess 503
second bulge 504
circuit board 600
first connecting hole 601
second connecting hole 602
electrical device 2000
first direction X
second direction Y
third direction Z

The following specific some embodiments are intended to describe this application in further detail with reference to the drawings.

### DETAILED DESCRIPTION OF EMBODIMENTS

The following describes the technical solutions in some embodiments of this application with reference to the drawings hereof. Evidently, the described some embodiments are merely a part of but not all of the embodiments of this application.

A component considered to be "disposed on" another component may be directly disposed on the other component or may be disposed on the other component through an intermediate component. A component considered to be "connected to" another component may be directly connected to the other component or may be connected to the other component through an intermediate component.

Unless otherwise defined, all technical and scientific terms used herein bear the same meanings as what is normally understood by a person skilled in the technical field of this application. The terms used in the specification of this application are merely intended to describe specific some embodiments but not to limit this application. The term "and/or" used herein is intended to include any and all combinations of one or more relevant items recited.

Understandably, when the two components are arranged parallel or perpendicular to each other, an angle may exist between the two components at a tolerance of 0% to ±5%. For example, when a tolerance of an angle between two vertically arranged components exists, one of the components tilts closer to or farther away from the other, and the tolerance of the angle between the two components is greater than 0° and less than or equal to 4.5°. When the projections of two elements are identical or overlap, a tolerance of 0 to ±10% is allowed between the two elements. For example, if the projected shape of one element is identical to that of another element, a tolerance of 0 to ±10% is allowed for the projected area.

The following describes some embodiments of this application in detail with reference to drawings. To the extent that no conflict occurs, the following some embodiments and the features in some embodiments may be combined with each other.

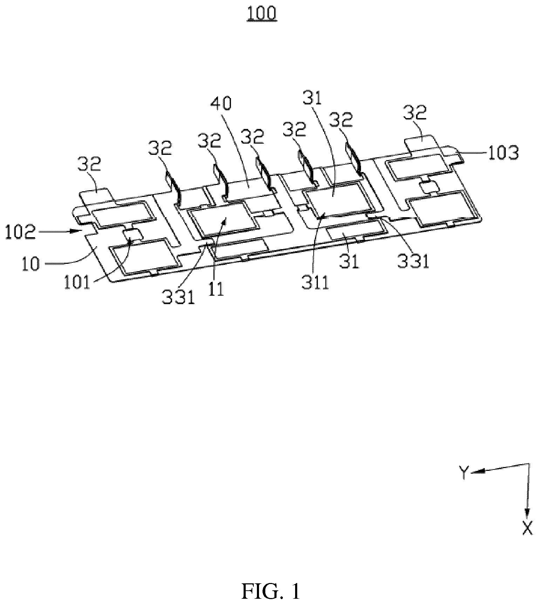

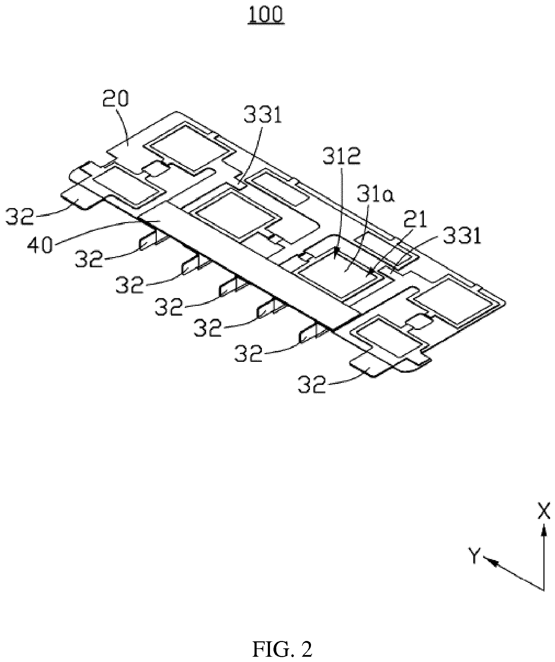

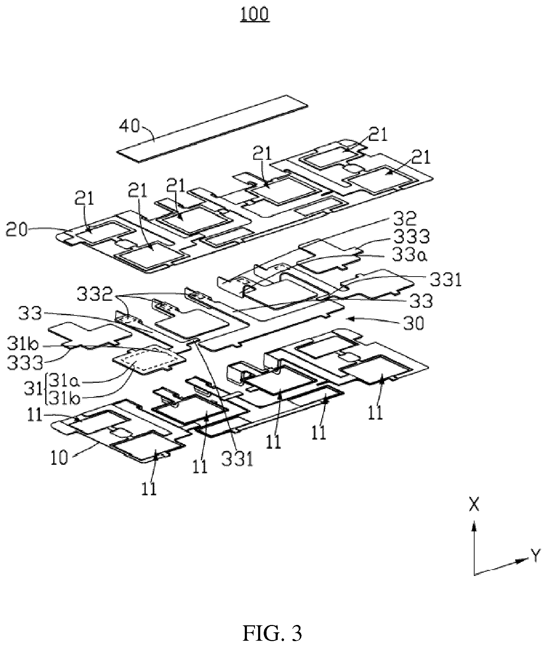

Referring to FIG. 1, FIG. 2, and FIG. 3, an embodiment of this application provides a connector 100, including a first insulator 10, a second insulator 20, and a plurality of conductive pieces 30. The first insulator 10 and the second insulator 20 are disposed sequentially along a first direction X. The plurality of conductive pieces 30 are spaced apart from each other are disposed between the first insulator 10 and the second insulator 20. Each conductive piece 30 includes a first connecting portion 31 and a second connecting portion 32. Both the first connecting portion 31 and the second connecting portion 32 are configured to be connected to other conductive pieces. The second connecting portions 32 of the plurality of conductive pieces 30 are spaced apart along a second direction Y. In an embodiment, the second direction Y is perpendicular to the first direction X.

In an embodiment, the other conductive pieces include an electrode terminal of the battery cell. The first connecting portion 31 is at least partially configured to be connected to the electrode terminal. In an embodiment, the second connecting portion 32 is configured to be connected to the circuit board. In an embodiment, the conductive piece 30 is connected to the electrode terminal by the first connecting portion 31, and connected to the circuit board by the second connecting portion 32, so as to implement connection between the battery cell and the circuit board, and in turn, implement voltage collection, thereby avoiding the need of the sampling terminal and the voltage sensing harness and reducing the number of materials that need to be used.

In an embodiment, each conductive piece 30 further includes a third connecting portion 33. The third connecting portion 33 connects the first connecting portion 31 and the second connecting portion 32. The first insulator 10 and the second insulator 20 wrap the third connecting portion 33, and are configured to insulate the third connecting portion 33, reduce the material, and define the positions of the plurality of conductive pieces 30, thereby reducing the risk of a short circuit caused by the contact of the plurality of conductive pieces 30.

In an embodiment, the first insulator 10 and the second insulator 20 is flexible and can reduce the pulling of other conductive pieces such as the electrode terminal in a case of vibration, thereby reducing the risk of detachment of the electrode terminal from the first connecting portion 31.

In an embodiment, the first insulator 10 is provided with a plurality of first openings 11. The second insulator 20 is provided with a plurality of second openings 21. Along the first direction X, a projection of the plurality of first openings 11at least partially overlaps with a projection of the plurality of second openings 21. The number of the first openings 11 is the same as the number of conductive pieces 30. The number of the second openings 21 is the same as the number of conductive pieces 30. Optionally, the projection of the first opening 11 completely overlaps the projection of the second opening 21. The other conductive pieces are connected to the first connecting portion 31 through the first openings 11 and the second openings 21. In an embodiment, the first connecting portion 31 includes a first connecting region 31a and a first extending region 31b. The first connecting region 31a is located inside one of the plurality of a first openings 11 when viewed along the first direction X. The first connecting region 31a is located inside one of the plurality of second openings 21 when viewed along a direction opposite to the first direction X. The first extending region 31b is formed by extending the periphery of the first connecting region 31a outward. The first extending region 31b is located between the first insulator 10 and the second insulator 20, and is configured to connect the edges of the first opening 11 and the second opening 21. The first connecting region 31a is configured to be connected to other conductive pieces.

In an embodiment, along the first direction X, the projection of the plurality of second openings 21 is located inside the projection of the plurality of first openings 11, and the open area of the second opening 21 is less than the open area of the first opening 11. Along the first direction X, the first connecting region 31a includes a first surface 311 and a second surface 312 disposed opposite to each other. Viewed along the first direction X, the first surface 311 is located inside the first opening 11. Viewed along a direction opposite to the first direction X, the second surface 312 is located inside the second opening 21.

The first surface 311 is configured to be in contact with and connected to other conductive pieces. The second surface 312 serves as a surface on which an external welding device performs welding. Other conductive pieces are connected to the first surface 311 through the welding on the second surface 312. The larger open area of the first opening 11 makes it convenient to connect other conductive pieces to the first surface 311.

In an embodiment, at least one of the third connecting portions 33 includes a first region 331. The first region 331 extends to a position between two adjacent first connecting portions 31 along the second direction Y, and is spaced apart from the two adjacent first connecting portions 31, thereby increasing the structural strength of the connector 100, and reducing the possibility of bending of the connector 100 along the second direction Y. In an embodiment, along the second direction Y, the two conductive pieces 30 located outermost each include a first region 331. Each first region 331 extends to a position between the two adjacent conductive pieces 30.

In an embodiment, at least a part of the third connecting portion 33 is bent toward a side of the first insulator 10 along the second direction Y, so as to increase the distance between the adjacent second connecting portions 32, reduce the risk of a short circuit caused by the touch between the adjacent second connecting portions 32, facilitate welding between the second connecting portion 32 and the circuit board, and reduce the impairment caused to the battery cell 200a during the welding.

In an embodiment, the third connecting portion 33 includes a third connecting sub-portion 33a. The third connecting sub-portion 33a is bent toward a side of the first insulator 10 along the second direction Y. The second connecting portion 32 is connected to the third connecting sub-portion 33a. The second connecting portion 32 protrudes beyond the first insulator 10 and the second insulator 20. A plurality of second connecting portions 32 are spaced apart along the second direction Y.

In an embodiment, the connector 100 further includes a third insulator 40. The third insulator 40 is connected to a side of the second insulator 20, the side being oriented away from the first insulator 10. The third insulator 40 extends along the second direction Y.

In an embodiment, along the first direction X, the projection of the third insulator 40 partially overlaps the projection of the third connecting sub-portion 33a, thereby reducing the possibility of connection between a foreign matter and the third connecting sub-portion 33a. Optionally, along the first direction X, the projection of the third insulator 40 covers the projection of the third connecting sub-portion 33a, thereby further enhancing the protection for the third connecting sub-portion 33a.

In another embodiment, along the first direction X, the projection of the third insulator 40 overlaps the projection of the second connecting portion 32, thereby increasing the structural strength of the connector 100 and reducing the possibility of deformation of the plurality of the second connecting portions 32. Optionally, along the first direction X, the projection of the third insulator 40 covers the projections of the plurality of the second connecting portions 32.

In an embodiment, along the first direction X, the projection of the third insulator 40 overlaps the projection of the third connecting portion 33. Further, the third connecting portion 33 includes a second region 332. The second region 332 is connected to the third connecting sub-portion 33a. Along the first direction X, the projection of the third insulator 40 overlaps the projection of the second region 332. This further increases the structural strength of the connector 100 and reduces the possibility of deformation of the connector 100.

In an embodiment, a through-hole 101, a third opening 102, and a first bulge 103 are disposed on the connector 100, and are configured to define the position of the connector 100 and facilitate connection. Understandably, one or more of the through-hole 101, the third opening 102, or the first bulge 103 may be disposed on the connector 100, depending on the actual situation. Optionally, the third opening 102 and the first bulge 103 assume asymmetric structures, thereby allowing for anti-misassembly during assembling. Optionally, a protruding portion 333 is disposed on one of the conductive pieces 30 at the edge of the third opening 102, thereby further facilitating positioning of the connector 100 during connection. Optionally, a protruding portion 333 is disposed on one of the conductive pieces 30 at the edge of the first bulge 103, thereby further facilitating positioning of the connector 100 during connection.

In a process of manufacturing the connector 100, a sheet material is stamped continuously by a piece of stamping equipment, so as to mold a plurality of conductive pieces 30. Along the width direction of the sheet material, the sheet material that remains after the molding of the plurality of conductive pieces 30 includes a first connecting strip (not shown in the drawing) and a second connecting strip (not shown in the drawing). The first connecting strip and the second connecting strip are kept continuous along the length direction of the sheet material. The plurality of molded conductive pieces 30 are connected to the first connecting strip and the second connecting strip, so that the plurality of molded conductive pieces 30 are positioned between the first connecting strip and the second connecting strip. Subsequently, the first insulator 10 and the second insulator 20 are disposed to wrap a plurality of conductive pieces 30 along the first direction X separately to cut off the first connecting strip and the second connecting strip of the sheet material, so that the plurality of conductive pieces 30 are severed from each other, and the plurality of conductive pieces 30 are spaced out. In an embodiment, after the first connecting strip and the second connecting strip of the sheet material are cut off, some of the conductive pieces 30 are still connected to each other. In this case, the junction between two conductive pieces 30 as well as the first insulator 10 and the second insulator 20 that wrap the junction are stamped to sever the connection between the conductive pieces 30 and form a through hole 101 on the connector 100.

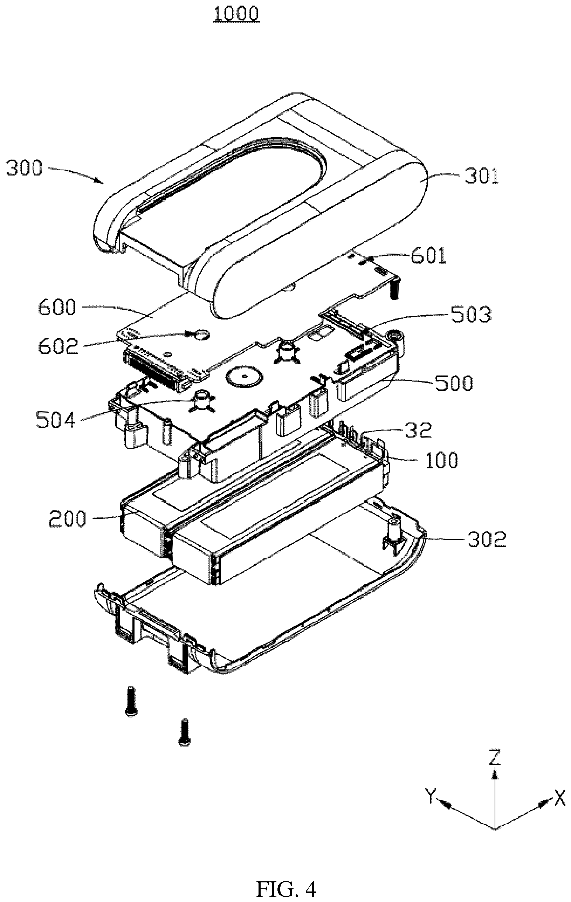

Referring to FIG. 4, this application further provides a battery pack 1000, including a connector 100, a cell module 200, and a housing assembly 300. The cell module 200 and the connector 100 are disposed inside the housing assembly 300. The connector 100 is connected to the cell module 200.

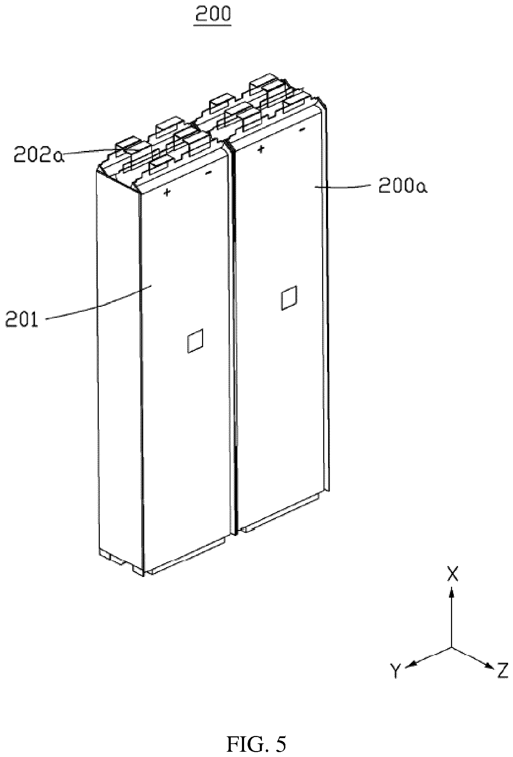

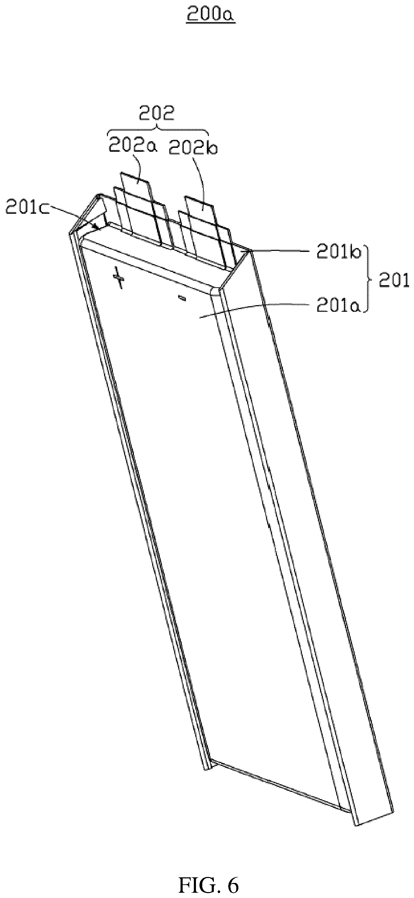

Referring to FIG. 5 and FIG. 6, the cell module 200 includes a plurality of battery cells 200a stacked along the third direction Z. Each battery cell 200a includes a cell housing 201, an electrode assembly (not shown in the drawing) disposed in the cell housing 201, and an electrode terminal 202 connected to the electrode assembly and led out of the cell housing 201. In an embodiment, the electrode assembly includes a jelly-roll structure formed by winding a positive electrode plate, a negative electrode plate, and a separator. In an embodiment, the third direction Z is perpendicular to the first direction X and the second direction Y. Optionally, the cell housing 201 includes an aluminum laminated film. Optionally, the battery cell 200a includes a pouch cell.

In an embodiment, a plurality of battery cells 200a are stacked along the third direction Z. For example, when the cell module 200 includes 6 battery cells 200a, 3 of the battery cells 200a are stacked into a first group along the third direction Z, and the other 3 battery cells 200a are stacked into a second group along the third direction Z. The first group and the second group are arranged along the second direction Y.

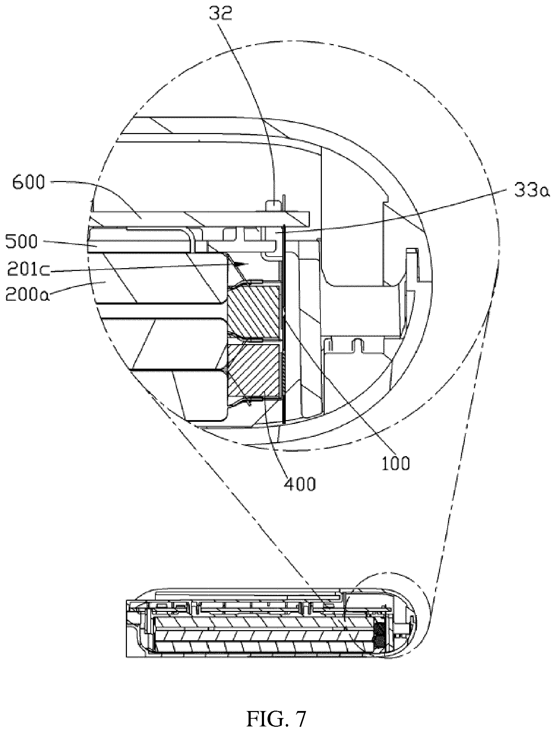

Referring to FIG. 6 and FIG. 7, the cell housing 201 includes a first part 201a and a second part 201b. The first part 201a accommodates the electrode assembly, and the second part 201b is connected to the first part 201a. The electrode terminal 202 protrudes from the second part 201b.

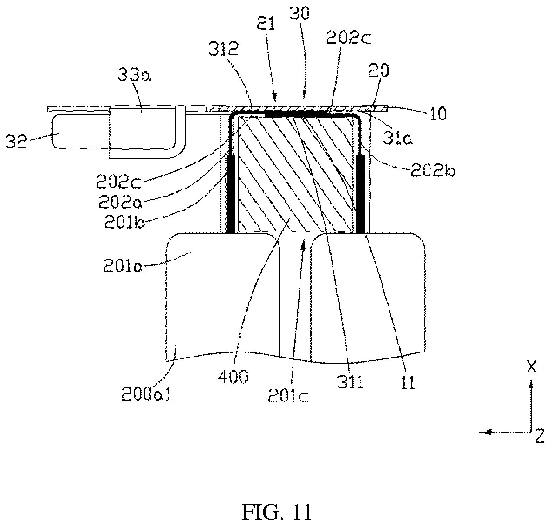

Referring to FIG. 11 together, in an embodiment, the plurality of battery cells 200a include a first battery cell 200a1. The first battery cell 200a1 is a battery cell located outermost along the third direction Z. Along the first direction X, a projection of the second connecting portion 32 is spaced apart from the projection of the cell housing 201, thereby alleviating the impairment caused by the second connecting portion 32 to the cell housing 201. Along the first direction X, the projection of the third connecting sub-portion 33a overlaps the projection of the cell housing 201, thereby enhancing the protection for the cell housing 201. Optionally, along the first direction X, the projection of the third connecting portion 33a is connected to the projection of the second connecting portion 32 and the projection of the cell housing 201, thereby further enhancing the protection for the cell housing 201. The first part 201a coordinates with the second part 201b to form a first recess 201c. Along a direction opposite to the first direction X, a projection of the third connecting sub-portion 33a is at least partially located inside the first recess 201c, thereby utilizing the space of the first recess 201c and reducing the space occupied by the connector 100.

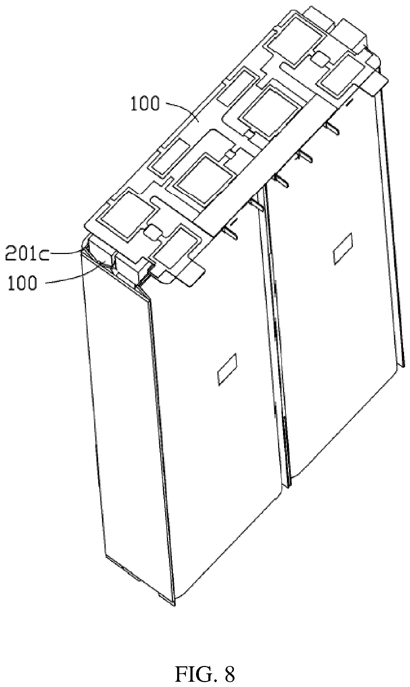

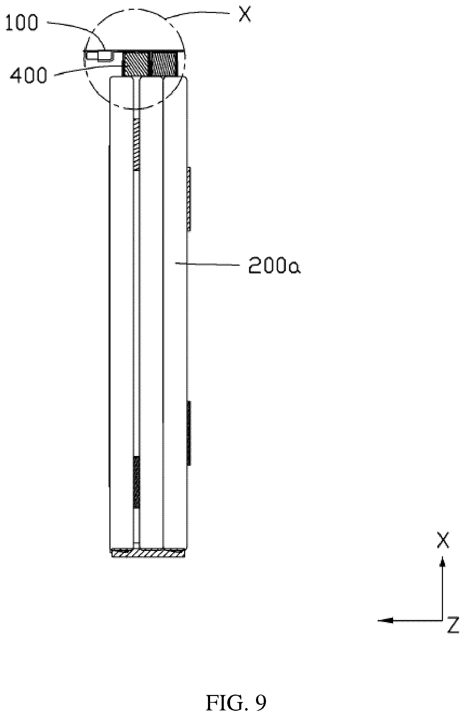

Referring to FIG. 8, FIG. 9, and FIG. 10, in some embodiments, the battery pack 1000 further includes a fourth insulator 400. The fourth insulator 400 is disposed in the first recess 201c and located between adjacent electrode terminals 202. The fourth insulator 400 disposed reduces the risk of a short circuit between adjacent electrode terminals 202, facilitates placement of the connector 100, and alleviates vibration of the connector 100. Optionally, the fourth insulator 400 includes foam.

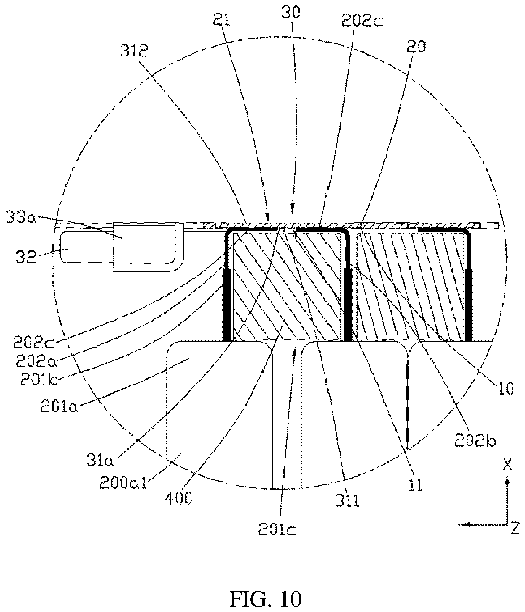

Referring to FIG. 5 and FIG. 10, in an embodiment, the electrode terminal 202 includes a welding portion 202c. The welding portion 202c is formed by bending the electrode terminal 202, and is configured to be connected to the first connecting region 31a of the first connecting portion 31. The electrode terminals 202 of adjacent battery cells 200a are bent toward each other and connected to the first connecting region 31a.

In an embodiment, along the first direction X, a projection of the welding portion 202c is located inside a projection of the first connecting region 31a. The positioning of the welding portion 202c makes it convenient to weld the welding portion 202c onto the first connecting region 31a and improves the yield rate of welding.

Referring to FIG. 6 and FIG. 10, in an embodiment, the electrode terminal 202 includes a first terminal 202a and a second terminal 202b. The polarity of the first terminal 202a is opposite to the polarity of the second terminal 202b. Of the first terminal 202a and the second terminal 202b, one is a positive terminal, and the other is a negative terminal. In this embodiment, an example is described in which the first terminal 202a is a positive terminal and the second terminal 202b is a negative terminal. Along the first direction X, the projection of the first terminal 202a of a battery cell 200a is spaced apart from the projection of the second terminal 202b of an adjacent battery cell 200a. The welding portion 202c of the first terminal 202a and the welding portion 202c of the second terminal 202b face each other and are spaced out, and are connected by the first connecting portion 31 to implement series connection between the battery cells 200a. Further, the welding portion 202c is connected to the first connecting portion 31 by welding such as laser welding, ultrasonic welding, and the like. In some other embodiments, the welding portion 202c may be connected to the first connecting portion 31 by other means such as conductive adhesive. Spacing out the electrode terminals 202 of the adjacent battery cells 200a reduces the impairment caused to the battery cell 200a during the welding.

In some other embodiments, along the first direction X, the first terminal 202a of the battery cell 200a may be spaced apart from the projection of the first terminal 202a of an adjacent battery cell 200a, and the two first terminals may be connected by the first connecting portion 31 to implement parallel connection between the battery cells 200a.

Referring to FIG. 11, in another embodiment, along the first direction X, the projection of the first terminal 202a of a battery cell 200a at least partially overlaps the projection of the second terminal 202b of an adjacent battery cell 200a. The first terminal 202a and the second terminal 202b are bent toward each other. The welding portion 202c of the first terminal 202a and the welding portion of the second terminal 202b are connected to each other by being stacked together. The welding portions 202c of the adjacent battery cells 200a are connected to each other. Therefore, to connect the welding portion 202c to the first connecting region 31a, only one welding operation needs to be performed, thereby reducing the processing operations.

In some other embodiments, the projection of the first terminal 202a of the battery cell 200a may at least partially overlap the projection of the first terminal 202a of the adjacent battery cell 200a, and the two first terminals may be connected by the first connecting portion 31 to implement parallel connection between the battery cells 200a.

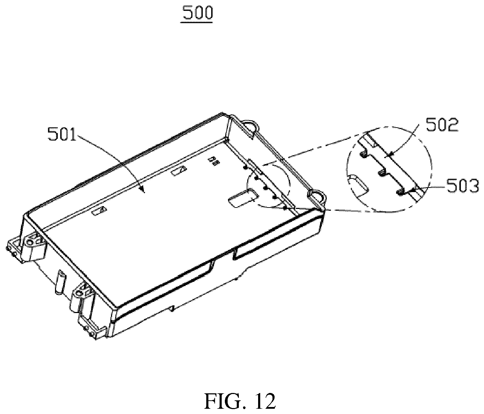

Referring to FIG. 4 and FIG. 12, in an embodiment, the battery pack 1000 further includes a first structural component 500. The first structural component 500 includes an accommodation portion 501 configured to accommodate the battery cell 200a. The first structural component 500 includes a fourth opening 502 and a second recess 503 that communicate with each other. The fourth opening 502 extends along the second direction Y. The second recess 503 is recessed along a direction opposite to the first direction X. When the battery cell 200a is placed in the accommodation portion 501, the second connecting portion 32 passes through the fourth opening 502, the third connecting sub-portion 33a is partially disposed in the second recess 503, and the third connecting sub-portion 33a protrudes beyond the first structural component 500. The position of the third connecting portion 33 is defined by the second recess 503, thereby increasing the positioning precision during assembling, and facilitating assembling.

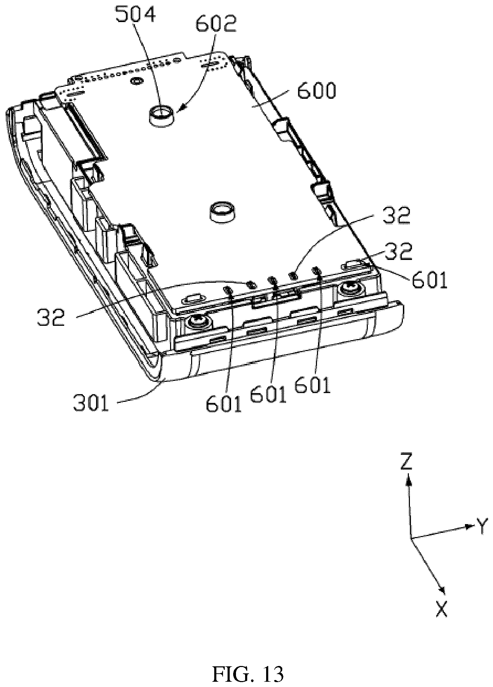

Referring to FIG. 4 and FIG. 13, in an embodiment, the battery pack 1000 further includes a circuit board 600. The circuit board 600 may be a circuit board that includes a battery management system configured to intelligently manage and maintain each battery unit, reduce occurrences of overcharge and over discharge of the battery, prolong the lifespan of the battery, and monitor the status of the battery. The circuit board 600 includes a plurality of first connecting holes 601. The second connecting portion 32 is disposed in the first connection hole 601, and is fixed to the circuit board 600 by soldering, laser welding, or another welding method, so as to implement connection between the battery cell 200a and the circuit board 600. In an embodiment, the first connecting hole 601 corresponds to the position of the second connecting portion 32. A part of the first connecting hole 601 extends along the second direction Y, and a part of the first connecting hole 601 extends along the first direction X. By extending a part of the first connecting hole 601 along the first direction X, the distance between adjacent first connecting holes 601 is increased along the second direction Y, thereby reducing the risk of a short circuit between the second connecting portions 32 disposed in adjacent first connecting holes 601 during assembling, and increasing the creepage distance.

Referring to FIG. 4, in an embodiment, the circuit board 600 includes a second connecting hole 602. The first structural component 500 includes a second bulge 504. The second bulge 504 is disposed in the second connecting hole 602, and is configured to mount the circuit board 600 to the first structural component 500.

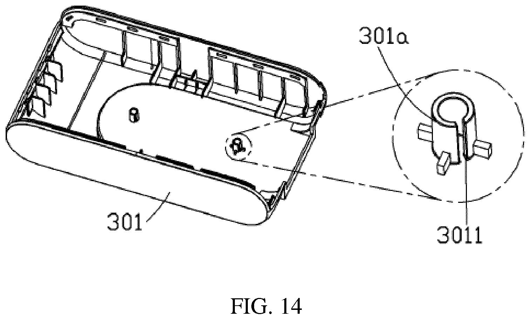

Referring to FIG. 4 and FIG. 14, in an embodiment, the housing assembly 300 includes a first shell 301 and a second shell 302. The first shell 301 is connected to the second shell 302, so that the connector 100, the cell module 200, the first structural component 500, and the circuit board 600 are accommodated in the first shell 301 and the second shell 302.

In an embodiment, the first shell 301 includes a third bulge 301a. The third bulge 301 a is in fit with and connected to the second bulge 504 to implement connection between the first shell 301 and the first structural component 500. Further, the third bulge 301a is disposed in the second bulge 504. Glue is provided in the clearance between the third bulge 301a and the second bulge 504, so as to fix the first shell 301 and the first structural component 500. With the third bulge 301a being in fit with and connected to the second bulge 504, fewer screws are put in use, and the risk of the screws puncturing the battery cell 200a is reduced.

In an embodiment, the third bulge 301a includes a fifth opening 3011 through which the third bulge 301a can be filled with glue conveniently.

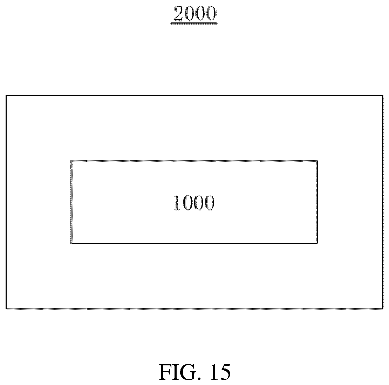

Referring to FIG. 15, this application further provides an electrical device 2000 that employs the battery pack 1000. In an embodiment, the electrical device 2000 of this application may be, but is not limited to, a portable fax machine, portable photocopier, portable printer, video recorder, liquid crystal display television set, handheld cleaner, transceiver, backup power supply, electric vehicle, electric motorcycle, an electric power-assisted bicycle, electric tool, large household storage battery, or the like.

In the connector 100, the battery pack 1000, and electrical device 2000 disclosed herein, a plurality of spaced conductive pieces 30 are disposed. Each conductive piece is connected to the electrode terminal 202 by the first connecting portion 31, and connected to the circuit board 600 by the second connecting portion 32, so as to implement connection between the battery cell 200a and the circuit board 600, and in turn, implement voltage collection, thereby avoiding the need of the current collecting plate, sampling terminal, and voltage sensing harness, reducing the number of materials that need to be used, and saving production cost. In contrast to a conventional method in which the tabs of a plurality of battery cells are passed through the current collecting plate and bent and connected to the sampling terminal on the current collecting plate, this application enables direct connection between the electrode terminal and the first connecting portion 31, thereby reducing the assembling difficulty.

A person of ordinary skill in the art understands that the foregoing some embodiments are merely intended to illustrate this application, but not intended to limit this application. All appropriate modifications and changes made to some embodiments without departing from the spirit and conception of this application still fall within the protection scope of this application.

## Claims

1. A connector, wherein the connector comprises a first insulator and a second insulator disposed along a first direction, and a plurality of conductive pieces spaced apart from each other are disposed between the first insulator and the second insulator; and
each conductive piece comprises a first connecting portion and a second connecting portion, both the first connecting portion and the second connecting portion of the each conductive piece are configured to be connected to other conductive pieces, and the second connecting portions of the plurality of conductive pieces are spaced apart along a second direction.

2. The connector according to claim 1, wherein the each conductive piece further comprises a third connecting portion, the third connecting portion connects the first connecting portion and the second connecting portion, the first insulator and the second insulator wrap the third connecting portion;
the third connecting portion comprises a third connecting sub-portion, the third connecting sub-portion is bent toward a side of the first insulator along the second direction, and the third connecting sub-portion is connected to the second connecting portion.

3. The connector according to claim 1, wherein the first insulator is provided with a plurality of first openings, the second insulator is provided with a plurality of second openings; and along the first direction, a projection of the plurality of first openings at least partially overlaps with a projection of the plurality of second openings.

4. The connector according to claim 3, wherein along the first direction, the projection of the plurality of second openings is located inside the projection of the plurality of first openings.

5. The connector according to claim 3, wherein the first connecting portion comprises a first connecting region and a first extending region; when viewed along the first direction, the first connecting region is located inside one of the plurality of first openings;
when viewed along the first direction, the first connecting region is located inside one of the plurality of second openings
the first extending region extends outward from a periphery of the first connecting region, and the first extending region is located between the first insulator and the second insulator.

6. The connector according to claim 2, wherein, the connector further comprises a third insulator; the third insulator is connected to a side of the second insulator, the side being oriented away from the first insulator; along the first direction, a projection of the third insulator overlaps a projection of the third connecting portion and/or the second connecting portion.

7. The connector according to claim 2, wherein at least one of the third connecting portions comprises a first region, and the first region extends to a position between two adjacent first connecting portions along the second direction.

8. A battery pack, wherein the battery pack comprises a housing assembly, a cell module, and the connector according to any one of claims 1 to 7, and the cell module is disposed inside the housing assembly and connected to the connector.

9. The battery pack according to claim 8, wherein the cell module comprises a plurality of battery cells stacked along a third direction; each battery cell comprises a cell housing, an electrode assembly disposed in the cell housing, and an electrode terminal connected to the electrode assembly and led out of the cell housing; and
the first connecting portion is connected to the electrode terminal, and the third direction is perpendicular to both the first direction and the second direction.

10. The battery pack according to claim 9, wherein the electrode terminal comprises a welding portion; and, along the first direction, a projection of the welding portion is located inside a projection of the first connecting portion.

11. The battery pack according to claim 9, wherein along the first direction, projections of electrode terminals of adjacent battery cells are spaced apart from each other, and the electrode terminals of the adjacent battery cells are connected to each other by the first connecting portion.

12. The battery pack according to claim 9, wherein the cell housing comprises:
a first part, wherein the electrode assembly is disposed in the first part;
a second part, connected to the first part, wherein the electrode terminal protrudes from the second part; and
the first part coordinates with the second part to form a first recess; and, along a direction opposite to the first direction, a projection of the third connecting portion is at least partially located inside the first recess.

13. The battery pack according to claim 12, wherein the battery pack further comprises a fourth insulator, and the fourth insulator is disposed in the first recess and located between adjacent electrode terminals.

14. The battery pack according to claim 8, wherein the battery pack further comprises a first structural component and a circuit board, the circuit board is connected to the first structural component, the circuit board comprises a plurality of first connecting holes, the first structural component is provided with a second recess, the third connecting portion is disposed in the second recess, and the second connecting portion is disposed in the first connecting hole.

15. An electrical device, wherein the electrical device comprises the battery pack according to any one of claims 8 to 14.
